# FASCICULE DE BREVET EUROPEEN

(11) **EP 4 108 075 B1**
(45) Date de publication et mention de la délivrance du brevet: **25.12.2024**
(21) Numéro de dépôt: 22175281.9
(22) Date de dépôt: 25.05.2022
(51) Int. Cl.: A01G 25/02, A01G 27/00, A01G 29/00

(54) **DISPOSITIF POUR ALIMENTER EN EAU AU MOINS UNE PLANTE NOTAMMENT POTAGERE ET INSTALLATION COMPORTANT AU MOINS UN TEL DISPOSITIF**
VORRICHTUNG ZUR WASSERVERSORGUNG VON MINDESTENS EINER PFLANZE, INSBESONDERE EINER GEMÜSEPFLANZE, UND ANLAGE MIT MINDESTENS EINER SOLCHEN VORRICHTUNG
DEVICE FOR SUPPLYING AT LEAST ONE PLANT WITH WATER, IN PARTICULAR A VEGETABLE, AND INSTALLATION COMPRISING AT LEAST ONE SUCH DEVICE

(30) Priorité: 24.06.2021 FR 2106786
(43) Date de publication de la demande: 28.12.2022
(73) Titulaire: RAIZ'O, 78980 Breval (FR)
(72) Inventeur: CLERISSE, Eric, 78980 BREVAL (FR)
(74) Mandataire: IPAZ

(56) Documents cités:
- CN-A- 109 601 336
- CN-Y- 2 402 130
- FR-A- 883 263
- US-A- 1 133 182

## Description

L'invention concerne de manière générale l'arrosage des plantes dans les potagers et vise à optimiser les besoins en eau des plantes non tubéreuse ou pivotante.

On comprendra par « plante » toute espèce végétale présentant des racines, qu'elle soit ornementale ou comestible.

Elle concerne en particulier un dispositif permettant d'alimenter en eau au moins une plante et une installation comportant au moins un tel dispositif, voire plusieurs dispositifs conformes à l'invention.

Pour pousser et donner de belles fleurs, de beaux fruits ou de beaux légumes, les plantes ont besoin notamment d'être régulièrement alimentées en eau.

Il existe de nombreux systèmes d'arrosage permettant de délivrer de l'eau aux pieds des plantes et de façon régulière, pour que le sol reste humide le plus longtemps possible.

Le problème, en temps de sécheresse, est la rapidité avec laquelle l'eau délivrée dans le sol s'évapore, aidé par le vent, le soleil et la température qui accélère ce phénomène.

Pour pallier ces inconvénients, il est usuel de bâcher les sols ou d'étaler du paillis aux pieds des plantes potagères ou d'arroser plus souvent afin de conserver la plante.

D'autres solutions ont été proposées pour permettre une alimentation en eau suffisante aux plantes, même en temps de canicule.

On connait des bulles d'irrigation, qui comportent une sphère (en verre ou en matière plastique) dans laquelle débouche un tube permettant de remplir la sphère, le tube étant planté à proximité du pied de la plante pour y délivrer l'eau contenue dans la sphère. Ce dispositif fonctionne pour les plantes en pots mais pas pour les plantes installées dans des potagers. Par ailleurs, leur contenance en eau est limitée, ce qui implique de les remplir souvent.

On connait du document FR 2 837 350 un dispositif conique et poreux est enfoncé dans la terre. Il est coiffé d'un accessoire permettant d'y associer une bouteille d'eau, tête à l'envers, présentant au moins une ouverture dans son fond pour autoriser la délivrance de l'eau. L'eau contenue dans la bouteille alimente le dispositif poreux qui délivre l'eau dans la terre par capillarité. L'inconvénient d'un tel dispositif est qu'il est totalement inesthétique (car les bouteilles plastiques sont visibles hors du sol). De plus, il encombre l'espace autour de la plante. Par ailleurs, en cas de canicule, les bouteilles plastiques chauffent et l'eau qu'elles contiennent s'évapore.

De plus, le plastique cuit, jaunie et casse avec temps.

On connait d'autres solutions décrites notamment dans le document FR 2 993 751 : cette solution associe une multitude de cônes poreux tels que ceux décrits dans le document cité précédemment, avec un tuyau d'alimentation des cônes en eau, le tube étant relié à un réservoir d'eau. Pour permettre l'alimentation en continu des cônes poreux, une dépression est créée dans le tube. Un tel dispositif permet de s'affranchir de l'utilisation de bouteilles plastiques. L'installation est toutefois globalement encombrante, fastidieuse à mettre en oeuvre et engendre de la perte d'eau.

On connait également des documents CN2402130, FR883263, US1133182 et CN109601336 des dispositifs qui sont enterrés at qui permettent d'alimenter en eau des plantes ou arbres en permettant a leur racine d'entrer dans le dispositif ou en les connectant à un tuyau plongé dans le dispositif.

L'invention permet de pallier aux inconvénients précités : elle offre une solution qui n'encombre pas l'espace autour de la plante, facile à mettre en oeuvre et qui limite l'évaporation d'eau en cas de canicule.

L'invention qui est obtenue selon la revendication 1, concerne à cet effet un dispositif pour alimenter en eau au moins une plante, notamment potagère, ledit dispositif comportant un récipient présentant un fond de récipient, une paroi latérale de récipient et une ouverture de récipient, par laquelle l'eau peut être introduite pour que le récipient forme un réservoir d'eau, ledit récipient pouvant être enterré. Le dispositif selon l'invention est remarquable en ce que ledit récipient est réalisé dans un matériau étanche, (pour empêcher l'évaporation de l'eau), en ce qu'il comporte un couvercle de fermeture de ladite ouverture de récipient, le couvercle étant étanche et amovible (pour permettre de renouveler le remplissage du récipient et pour limiter au maximum l'évaporation), et en ce que la paroi latérale de récipient comporte au moins une ouverture de paroi traversante par laquelle au moins une racine de ladite au moins une plante peut être au moins partiellement introduite (pour que la plante s'alimente en eau).

Ainsi réalisé, le dispositif est conçu pour être enterré : il n'encombre ainsi pas l'espace autour des plantes et ne cause aucune nuisance visuelle.

De plus, il permet d'éviter l'évaporation de l'eau contenue dans le réservoir et conserve l'eau à une température fraiche en cas de canicule. En effet, le dispositif permet d'empêcher l'eau de s'infiltrer dans le sol, de s'évaporer à cause du soleil et du vent.

Il est également facile à remplir grâce à la présence du couvercle de fermeture amovible qui est laissé accessible depuis la surface de la terre dans laquelle une partie de la racine de la plante est installée et le réservoir enterré.

Le dispositif conforme à l'invention comprend également les caractéristiques suivantes, :
- Le dispositif peut comporter au moins un tube étanche apte à être inséré de façon amovible dans ladite ouverture de paroi et apte à recevoir au moins partiellement une racine de ladite plante. La présence de ce tube permet de faciliter l'introduction d'une partie de la racine de la plante dans l'ouverture de paroi. Combiné au conduit incliné, le tube permet d'orienter une partie de la racine vers le fond du récipient. En insérant le tube dans le conduit, il est possible d'assurer une étanchéité du dispositif au niveau de l'ouverture de paroi, ce qui permet à l'eau du réservoir de remonter dans le tube (principe des vases communicants) et d'atteindre une partie de la racine introduite dans le tube mais pas encore suffisamment développée pour sortir du tube et plonger dans le récipient ;
- Le tube peut être réalisé dans une matière déformable élastiquement (c'est-à-dire qui reprend sa forme après avoir été déformée), par exemple en plastique souple, et comporter une découpe qui s'étend parallèlement à l'axe de tube au moins partiellement sur ladite longueur de tube. Cela permet d'ouvrir manuellement le tube sur sa longueur afin d'y insérer une partie de la racine, ce qui facilite l'insertion d'une partie de la racine. Le dispositif peut également comprendre les caractéristiques suivantes, prises séparément ou en combinaison :
- Ladite au moins une ouverture de paroi peut être solidaire d'un conduit saillant présentant un axe de conduit incliné par rapport à ladite paroi latérale. Cela permet de guider une partie de la racine de la plante introduite à travers l'ouverture de paroi ;
- Ledit tube peut présenter une paroi transparente, pour s'assurer visuellement de la bonne introduction de la racine de la plante dans le tube,
- Le récipient peut également être réalisé en plastique, pour sa légèreté, sa robustesse et son coût ;
- L'ouverture de paroi peut être réalisée à une seconde hauteur dans la paroi, le récipient présentant une première hauteur de récipient, ladite seconde hauteur étant comprise sensiblement entre la moitié de la première hauteur du récipient et les trois-quarts de la première hauteur de récipient. Cela permet de disposer d'une réserve d'eau dans le récipient qui soit comprise au minimum entre les trois-quarts et la moitié du récipient. Lors de la mise en oeuvre du dispositif, il a même été constaté que le dispositif pouvait contenir jusqu'à 95% d'eau car la racine présente dans le tube ou dans l'ouverture de paroi permettait de fermer l'ouverture de paroi de façon étanche après sa croissance, ce qui permettait de garder un niveau d'eau dans le récipient situé proche de l'ouverture du récipient ;
- Ledit couvercle de fermeture amovible peut comporter un trou traversant, apte à recevoir un tuyau,
- Ledit dispositif peut comporter un accessoire amovible tubulaire, présentant un diamètre extérieur qui est inférieur à un diamètre de ladite ouverture de paroi, pour être accueilli de façon amovible dans ladite ouverture de paroi et présentant un diamètre intérieur qui est supérieur à un diamètre dudit tube pour accueillir ledit tube ;
- Avantageusement, ledit accessoire amovible tubulaire peut comporter au moins un joint radial extérieur, ledit joint radial étant positionné à distance d'une extrémité dudit accessoire tubulaire.

L'invention concerne également une installation selon la revendication 8 comportant au moins un dispositif équipé d'un couvercle avec un trou traversant, ladite installation comportant un tuyau dit principal d'amenée d'eau, apte à être relié à une source d'arrivée d'eau dite générale, ladite arrivée générale étant reliée à au moins un tuyau reçu dans ledit trou traversant dudit couvercle de fermeture amovible dudit au moins un dispositif.

L'installation conforme à l'invention peut également comporter ladite source d'arrivée d'eau.

L'invention selon la revendication 10 concerne enfin un procédé de mise en oeuvre d'une telle installation, comportant au moins un dispositif tel que défini ci-avant, équipé d'un tube et équipé d'un couvercle avec un trou traversant, ledit procédé comprenant les étapes suivantes :
a) placer une partie d'une racine d'une plante dans un tube,
b) insérer le tube dans l'ouverture de la paroi latérale du récipient,
c) enterrer totalement ledit récipient et les racines libres de la plante dans la terre, en laissant le couvercle apparent au-dessus du niveau de la terre,
d) répéter éventuellement les opérations a), b) et c) pour d'autres plantes,
e) insérer le tuyau dans le trou traversant dudit couvercle,
f) alimenter en eau le tuyau principal, relié au tuyau, de sorte à remplir en eau le ou les récipients,
g) surveiller visuellement le ou les couvercle et arrêter d'alimenter en eau le tuyau principal dès que l'on observe un débordement en eau par le trou traversant du couvercle du récipient.

D'autres avantages et caractéristiques de l'invention apparaîtront à l'examen de la description détaillée d'un mode de mise en oeuvre nullement limitatif, et des dessins annexés, sur lesquels :
La figure 1 est une représentation schématique d'un dispositif selon un mode de réalisation conforme à l'invention, en vue de côté.
La figure 2 illustre un élément du dispositif montré en figure 1, en position d'ouverture et vu en perspective, ainsi qu'une plante et ses racines.
La figure 3 illustre l'élément du dispositif montré en figure 1, en position de fermeture et vu en perspective, dans lequel est accueillie une racine de la plante montrée en figure 2.
La figure 4 illustre le dispositif montré en figure 1, vu partiellement en coupe et de côté, en position dans la terre.
La figure 5 est un autre dispositif conforme à l'invention, vu partiellement en coupe et de côté, en position dans la terre.
La figure 6 illustre une installation conforme à l'invention comportant au moins deux dispositifs, en position dans la terre.
La figure 7 illustre un accessoire d'un dispositif conforme à l'invention, vu en perspective.
Et la figure 8 montre le dispositif conforme à l'invention équipé de l'accessoire montré en figure 7, vu en perspective.

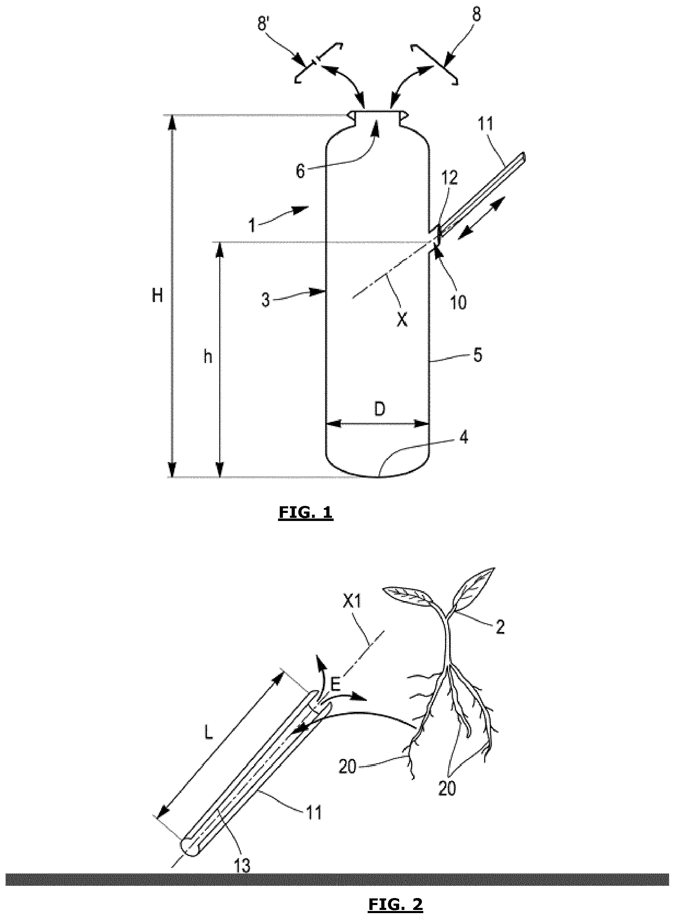

La figure 1 montre un mode de réalisation d'un dispositif 1 conforme à l'invention, permettant d'alimenter en eau au moins une plante 2 (voir figure 2 et suivantes).

La plante 2 peut être une plante potagère ou autres type fleurs. Elle peut également être une plante non potagère mais pas tubéreuse ou pivotante : l'invention n'est pas limitée à une application sur une catégorie particulière de plantes. Elle peut être mise en oeuvre avec des plantes dont les racines sont dites « chevelues ».

Elle trouve toutefois un intérêt à être mise en oeuvre dans un potager qui nécessite une attention particulière, visant à assurer un apport en eau régulier aux plantes.

Comme on peut le voir en particulier sur la figure 1, ledit dispositif 1 comporte un récipient 3 qui est conçu pour être enterré totalement.

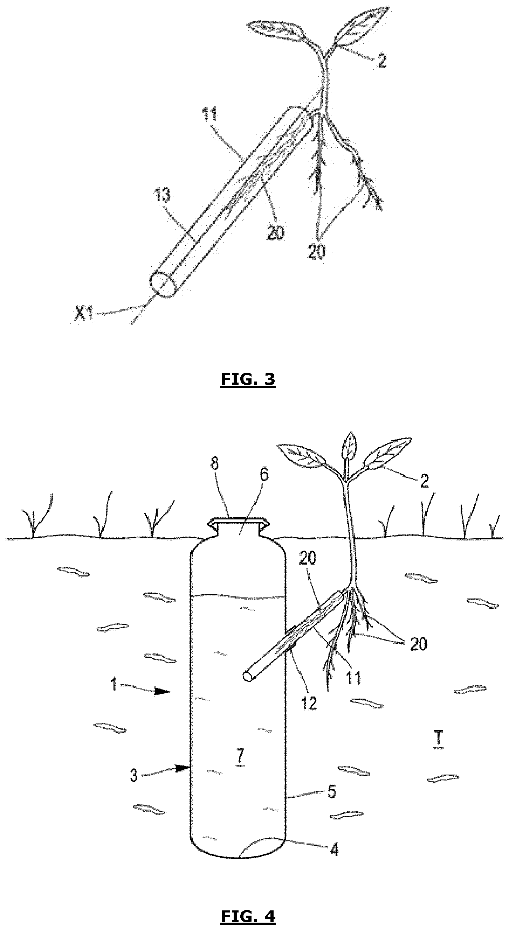

La figure 4 montre le dispositif de la figure 1 en place dans la terre T.

Le récipient 3 présente une forme allongée rappelant la forme d'une bouteille : il comporte un fond 4 de récipient, orientée vers le bas sur la figure 1, une paroi latérale 5 de récipient et une ouverture 6 de récipient orientée vers le haut sur la figure 1.

De l'eau 7 peut être introduite dans le récipient 3 (voir figures 4) par l'ouverture 6 pour que le récipient 3 forme un réservoir d'eau. Conformément à l'invention, la paroi latérale 5 et le fond 4 du récipient sont étanches : le récipient est ainsi, et par exemple, réalisé en matière plastique ou en terre cuite dont la surface des parois est traitée avec un revêtement hydrophobe, par exemple. Ainsi, le récipient 3 ne permet pas à l'eau de s'évaporer ou de se disperser à travers sa paroi ou son fond. Le récipient montré en figure 1 présente une hauteur H de sensiblement 30 cm, un diamètre D de sensiblement 8,5 cm et a une contenance maximum de sensiblement 1,5 L.

Comme on peut le voir également en figure 1, le dispositif conforme à l'invention comporte également un couvercle 8 (ou 8'), permettant de fermer l'ouverture 6 de récipient.

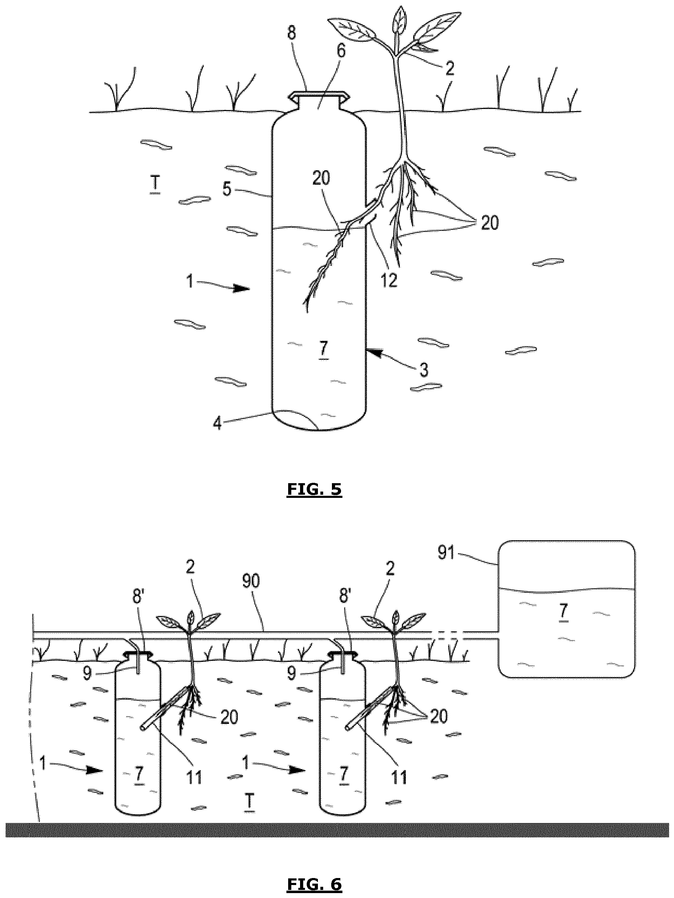

Le couvercle 8 (ou 8') est amovible, pour permettre de remplir le récipient 3 à plusieurs reprises et de visualiser le niveau de l'eau. Suivant un premier mode de réalisation, le couvercle 8 est étanche et plein, ce qui empêche l'eau de s'évaporer à travers lui (figures 4 ou 5). Suivant un second mode de réalisation, le couvercle 8' présente un trou traversant, sensiblement en son centre, pour permettre l'introduction d'un tuyau 9 dans le récipient à travers le couvercle 8' (voir figure 6), afin d'alimenter automatiquement les récipients conformément à une installation selon l'invention (qui sera décrite par la suite). Conformément à l'invention, la paroi latérale 5 de récipient comporte une ouverture 10 de paroi, qui est traversante.

L'ouverture 10 est réalisée, dans le cadre de ce mode de réalisation, à une hauteur h qui est sensiblement égale au tiers de la hauteur H du récipient 3.

Aussi, la hauteur h à laquelle est réalisée l'ouverture 10 est comprise entre la moitié de la hauteur H et les trois quarts de la hauteur H. De cette façon, la réserve d'eau dans le récipient est toujours au moins supérieure ou égale à la moitié de la contenance du récipient 3. L'ouverture 10 permet d'introduire une partie de la racine 20 de la plante 2 dans le récipient, comme montré par exemple en figure 5.

L'ouverture 10 présente un bord qui est entouré d'un bourrelet pour éviter de blesser la racine 20 lors de son introduction à travers l'ouverture de paroi 10, dans le cadre de ce mode de réalisation.

Le positionnement de l'ouverture de paroi est important à plusieurs titres :
Il est préférable qu'elle se situe à une hauteur de 10 cm en partant du dit couvercle du récipient.

En outre, l'ouverture de paroi va guider le positionnement de ladite plante au niveau du sol.

Une ouverture de paroi trop basse du récipient ne permettrait pas de profiter du contenu total du récipient et obligerait à créer un tube à insérer trop long pour que ladite partie de racine capte l'eau contenant dans ledit récipient : la partie de racine ne pourrait pas se développer normalement du fait de la longueur à parcourir, ce qui occasionnerait un manque d'eau dans le temps.

Aussi, une ouverture trop basse ne permettra à ladite plante une croissance normale de ses parties de racines par le manque d'espace. Dans le cadre d'un mode de réalisation plus abouti et montré en figures 1 à 4, le dispositif comporte un tube 11, apte, à être inséré de façon amovible dans ladite ouverture 10 de paroi et apte à recevoir au moins partiellement la partie de racine 20 de la plante 2.

Le tube 11 facilite l'introduction de la partie de racine 20 dans le récipient 3.

Le tube 11 peut être étanche ou non.

Le récipient comporte également, autour de l'ouverture 10, un conduit 12 saillant présentant un axe de conduit X qui est incliné par rapport à la paroi latérale 5 du récipient. Le conduit 12 présente un diamètre tel qu'il peut accueillir le tube 11 de façon amovible. Le conduit 12 permet également de maintenir le tube 11 dans une position telle qu'il est orienté vers le fond du récipient 3. L'orientation du tube 11, destiné à accueillir une partie de la racine 20 d'une plante 2, permet de positionner la partie de racine 20 à un niveau situé sous le niveau de l'ouverture 10 de paroi latérale 5 du récipient 3.

Le fait d'insérer le tube 11 dans le conduit 12 réalise une étanchéité.

Le tube 11 est montré plus particulièrement en figures 2 et 3.

Le tube 11 est un tube de section ronde, comme le conduit 12, ce qui permet d'introduire le tube 11 dans le conduit 12 sans avoir à orienter l'un par rapport à l'autre.

Le tube 11 présente un diamètre de sensiblement 14 mm ou de 16 mm et le conduit 12 présente un diamètre compris entre sensiblement 15 mm et 17 mm, dans le cadre de cet exemple de réalisation.

De préférence, le tube 11 est réalisé en matière élastiquement malléable par exemple en plastique souple pour être facilement orientable.

Il est prévu que le tube 11 comporte une découpe 13 qui s'étend sur une partie ou sur toute la longueur du tube suivant la longueur de la partie de racine (voir figures 2 et 3) : autrement dit, le tube 11 présente un axe de tube X1 et une longueur de tube L. La découpe 13 s'étend parallèlement à l'axe de tube X1 sur ladite longueur de tube L.

Le tube 11 étant réalisé en matière souple, il peut s'ouvrir de part et d'autre de la découpe 13 (position ouverte du tube 11 montrée en figure 2) et il peut se fermer par rappel élastique de la matière dont il est réalisé (position fermée du tube 11 montrée en figure 3 par exemple). Pour insérer une racine 20 dans le tube 11, il suffit de l'ouvrir en écartant la paroi du tube (écartement symbolisé par les flèches E sur la figure 2) et d'insérer la racine 20. En cessant de maintenir ouvert le tube 11, la paroi reprend sa forme tubulaire et le tube 11 se referme autour de la racine 20 (voir figure 3).

Eventuellement, le tube 11 peut présenter une paroi transparente, permettant de visualiser la position de la racine 20 dans le tube 11 (pour s'assurer par exemple visuellement de la bonne introduction de la partie de racine de la plante dans le tube).

Une fois la partie de racine 20 en position dans le tube, il est facile d'introduire le tube 11 (et la partie de racine 20 qu'il comporte) dans le récipient 3 sans risquer de blesser la racine 20.

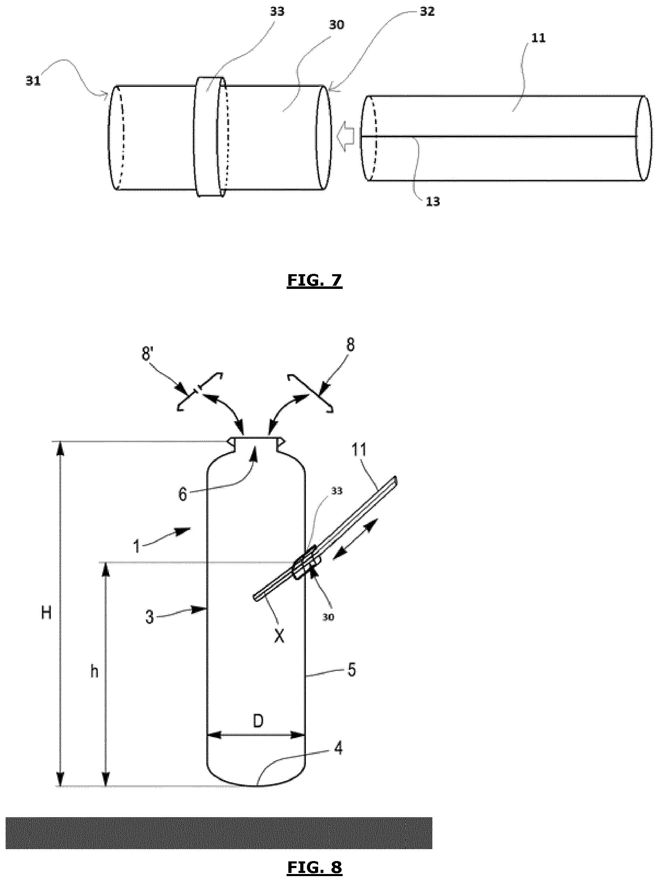

Pour faciliter l'introduction et le guidage du tube 11 dans le récipient, il peut également être prévu d'équiper le dispositif avec un accessoire tubulaire amovible (référence 30, figures 7 ou 8), apte à être inséré et dégagé de l'ouverture 10 de paroi latérale du récipient.

L'accessoire tubulaire 30 peut être réalisé dans différents matériaux, et est de préférence rigide et de section circulaire. Il présente une première extrémité 31 et une seconde extrémité 32.

Sensiblement à mi-distance entre les deux extrémités 31 et 32 (donc, à distance d'une des deux extrémités), l'accessoire tubulaire 30 peut être entouré d'un joint 33, de préférence en caoutchouc, et qui sert à la fois :
- à stopper l'introduction de l'accessoire dans l'ouverture 10 de paroi, et
- à étanchéifier le bord de l'ouverture 10 de paroi.

La figure 8 montre l'accessoire 30 inséré dans l'ouverture 10 de paroi, ainsi que le tube 11 inséré dans l'accessoire 30.

Le joint 33 de l'accessoire est en butée de la paroi latérale 5 du récipient 1.

Il devra être compris que l'accessoire pourrait ne pas comporter de joint 33 sans sortir du cadre de l'invention.

Le joint pourrait être réalisé d'une seule pièce avec l'accessoire amovible, ou bien être rapporté autour de l'accessoire 30. Dans un tel cas, l'accessoire 30 serait inséré à mi longueur, de préférence.

Il devra également être compris que l'accessoire pourrait également être inséré dans le conduit 12 de l'exemple de dispositif montré en figure 1 sans sortir du cadre de l'invention.

L'accessoire 30 présente ainsi un diamètre extérieur d'accessoire qui est inférieur au diamètre de l'ouverture 10 de paroi, pour permettre son introduction. Sa rigidité permet de faciliter son introduction.

Le tube 11 est inséré plus facilement dans l'accessoire amovible 30 quand directement dans l'ouverture 10 de paroi, car l'accessoire assure un guidage du tube 11 lors de son introduction dans le récipient.

La figure 4 montre le dispositif de la figure 1 mis en position dans la terre :
Le récipient 3 est inséré de sorte que son couvercle 8 affleure le niveau du sol. L'extrémité du tube 11 qui reçoit une partie de la racine 20 se trouve de préférence à une profondeur P dans la terre T comprise entre 5 et 10 cm (suivant la longueur de la racine 20).

Il est rappelé que le dispositif 1 conforme à l'invention pourrait ne pas comporter de tube 11 et être mis en oeuvre de manière qu'une partie de la racine 20 soit directement introduite dans l'ouverture de paroi 10, ce qui contrairement au dispositif, génèrerait une fuite conséquente et ne pourrait conserver une part importante d'eau dans le dit récipient.

Pour remplir le récipient 3 avec de l'eau, il suffit de retirer le couvercle 8 et de verser de l'eau dans le récipient à travers l'ouverture 6. L'ouverture 6 est ensuite refermée en repositionnant le couvercle 8.

Dans ce cas, il est nécessaire de vérifier régulièrement que le récipient 3 comporte suffisamment d'eau pour que le tube 11 (et / ou la racine 20) trempe dans l'eau et de compléter le niveau d'eau si besoin.

Une autre solution permet de ne pas avoir à surveiller le niveau d'eau dans le récipient : la figure 6 montre une installation conforme à l'invention qui comporte deux dispositifs 1, chacun d'entre eux étant installé dans la terre T avec une racine 20 d'une plante 2 en place dans leur tube 11 inséré dans leur récipient 3.

Il devra être compris que l'installation conforme à l'invention pourrait comprendre plus que deux dispositifs 1 sans sortir du cadre de l'invention : par exemple, elle pourrait comprendre autant de dispositifs qu'il y a de plantes à alimenter dans un potager.

Elle pourrait également ne comprendre qu'un seul dispositif dans le cadre d'une automatisation de l'alimentation en eau d'un seul dispositif. L'installation montrée en figure 6 comporte un tuyau principal 90 d'amenée d'eau qui est relié à une source 91 d'arrivée d'eau 7, ledit tuyau principal 90 étant relié à des tuyaux 9 reçus dans lesdits couvercles 8' de fermeture amovible desdits dispositifs 1.

La source 91 générale d'arrivé d'eau peut être une citerne, un collecteur d'eau de pluie, un réseau d'alimentation en eau potable...

La source 91 d'arrivée d'eau peut être équipée d'un dispositif d'ouverture et de fermeture pour autoriser ou non la délivrance d'eau dans le tuyau principal 90.

Le procédé d'installation conforme à l'invention est le suivant :
Dans un premier temps, on observe les racines de la plante et l'on place une partie de la racine (de préférence la plus longue) dans un tube 11, comme il a été vu précédemment.

Puis, le tube 11 est inséré dans l'ouverture 10 de la paroi latérale 5 du récipient 3.

L'ensemble plante / dispositif est alors placé en terre, de manière que l'ouverture latérale se trouve environ 10 cm sous le niveau du sol et que le couvercle 8' soit laissé apparent au-dessus du niveau du sol (de la terre).

Cette étape est répétée autant de fois qu'il y a de plantes et de dispositif conformes à l'invention à mettre en terre.

Quand l'ensemble des plantes et des dispositifs est placé en terre, on insère dans chaque trou traversant dudit couvercle 8' de chaque dispositif un tuyau 9 relié au tuyau principal 91, et on ouvre l'arrivée d'eau pour alimenter le tuyau principal en eau, ce qui conduit au remplissage des récipients 3.

On surveille alors visuellement le ou les couvercle 8' et l'on ferme l'arrivée d'eau lorsque l'on observe un débordement en eau par le trou traversant des couvercles 8' des récipients (le débordement signifiant que les récipients sont pleins). Ce principe demande un peu de travail mais un gain de temps et d'efforts par la suite.

On comprend de la description qui précède comment le dispositif conforme à l'invention permet d'alimenter une plante en limitant l'évaporation d'eau tout en restant visuellement discret. Elle permet également de limiter la consommation en eau par la perte due à la filtration ainsi que de conserver sa fraicheur et sa qualité étant à l'abri de la lumière.

Grâce au dispositif conforme à l'invention, la charge de travail d'arrosage est diminuée et la plante gère seule sa consommation d'eau en fonction de ses besoins.et donc une meilleure gestion de l'eau.

Le dispositif peut être réutilisé d'une année sur l'autre et peut être nettoyé.

Il est toutefois à noter que le dispositif pourrait également rester en terre une fois mis en place, car il ne craint pas le gel, à condition de s'assurer qu'il ne contient plus d'eau avant la saison hivernale.

Il devra toutefois être entendu que l'invention n'est pas limitée aux modes de réalisation spécifiquement représentés sur les figures et qu'elle pourrait s'étendre à la mise en oeuvre de moyens équivalents.

## Revendications

1. Dispositif (1) pour alimenter en eau (7) une plante (2), notamment potagère, ledit dispositif (1) comportant un récipient (3) présentant un fond (4) de récipient (3), une paroi latérale (5) de récipient (3) et une ouverture (6) de récipient (3), par laquelle l'eau (7) peut être introduite pour que le récipient (3) forme un réservoir d'eau, ledit récipient (3) pouvant être enterré,
ledit récipient (3) étant réalisé dans un matériau étanche, comportant un couvercle (8, 8') de fermeture de ladite ouverture (6) de récipient, le couvercle (8, 8') étant étanche et amovible,
et la paroi latérale (5) de récipient (3) comportant au moins une ouverture (10) de paroi qui est traversante et par laquelle au moins une partie de la racine (20) de ladite plante (2) peut être au moins partiellement introduite, **caractérisé en ce qu**'il comporte au moins un tube (11), apte à être inséré de façon amovible dans ladite ouverture (10) de paroi latérale (5) et apte à recevoir au moins partiellement une racine (20) de ladite au moins une plante (2) et en ce que le tube (11) est réalisé en matériaux élastiquement déformable, présente un axe de tube (X1) et s'étend sur une longueur (L) de tube et en ce que le tube (11) comporte une découpe (13) qui s'étend parallèlement audit axe de tube (X1) au moins partiellement sur ladite longueur (L) de tube.

2. Dispositif selon la revendication 1, **caractérisé en ce que** ladite au moins une ouverture (10) de paroi est solidaire d'un conduit (12) saillant de ladite paroi latérale (5), présentant un axe de conduit (X) qui est incliné par rapport à ladite paroi latérale (5).

3. Dispositif selon l'une des revendications précédentes, **caractérisé en ce que** le récipient (3) est réalisé en plastique.

4. Dispositif selon l'une quelconque des revendications précédentes, le récipient (3) présentant une hauteur (H) de récipient, **caractérisé en ce que** ladite ouverture (10) de paroi latérale (5) est réalisée à une seconde hauteur (h) dans la paroi latérale (5), ladite seconde hauteur (h) étant comprise sensiblement entre la moitié de la hauteur (H) du récipient (3) et les trois quarts de la hauteur (H) de récipient (3).

5. Dispositif selon l'une quelconque des revendications précédentes, **caractérisé en ce que** ledit couvercle (8') de fermeture amovible comporte un trou traversant, apte à recevoir un tuyau (9).

6. Dispositif selon l'une quelconque des revendications précédentes, **caractérisé en ce qu'**il comporte un accessoire (30) amovible tubulaire, présentant un diamètre extérieur qui est inférieur à un diamètre de ladite ouverture (10) de paroi (5), pour être accueilli de façon amovible dans ladite ouverture (10) de paroi (5) et présentant un diamètre intérieur qui est supérieur à un diamètre dudit tube (11) pour accueillir ledit tube (11).

7. Dispositif selon la revendication 6, **caractérisé en ce que** ledit accessoire (30) amovible tubulaire comporte au moins un joint (33) radial extérieur, ledit joint (33) radial étant positionné à distance d'une extrémité (31) dudit accessoire (30) amovible tubulaire.

8. Installation comportant au moins un dispositif (1) selon la revendication 5, ladite installation comportant un tuyau principal (90) d'amenée d'eau, apte à être relié à une source (91) d'arrivée d'eau, ledit tuyau principal (90) étant relié à au moins un tuyau (9) reçu dans ledit trou traversant dudit couvercle (8') de fermeture amovible dudit au moins un dispositif (1).

9. Installation selon la revendication 8, **caractérisée en ce qu'**elle comporte ladite source d'arrivée d'eau (91).

10. Procédé de mise en oeuvre d'une installation selon la revendication 8 ou 9, comportant au moins un dispositif selon la revendication 1 et 5 ou 3 et 5, ledit procédé comprenant les étapes suivantes :
a) placer une partie de la racine d'une plante dans un tube (11),
b) insérer le tube (11) dans l'ouverture (10) de la paroi latérale (5) du récipient (3),
c) enterrer totalement ledit récipient (3) et les racines libres de la plante dans la terre, en laissant le couvercle (8') apparent au-dessus du niveau de la terre,
d) répéter éventuellement les opérations a), b) et c) pour d'autres plantes,
e) insérer le tuyau (9) dans le trou traversant dudit couvercle (8'),
f) alimenter en eau le tuyau principal (91), relié au tuyau (9), de sorte à remplir en eau le ou les récipients (3),
g) surveiller visuellement le ou les couvercle (8') et arrêter d'alimenter en eau le tuyau principal (91) dès que l'on observe un débordement en eau par le trou traversant du couvercle (8') du récipient (3).

## Patentansprüche

1. Vorrichtung (1) zum Versorgen mit Wasser (7) einer Pflanze (2), insbesondere einer Kulturpflanze, mit Wasser, wobei die Vorrichtung (1) einen Behälter (3) umfasst, der einen Boden (4) des Behälters (3), eine Seitenwand (5) des Behälters (3) und eine Öffnung (6) des Behälters (3), durch die das Wasser (7) eingeleitet werden kann, damit der Behälter (3) ein Wasserreservoir bildet, aufweist, wobei der Behälter (3) vergraben sein kann,
wobei der Behälter (3) aus einem dichten Material besteht, einen Deckel (8, 8') zum Verschließen der Öffnung (6) des Behälters umfasst, wobei der Deckel (8, 8') dicht und abnehmbar ist und die Seitenwand (5) des Behälters (3) wenigstens eine Öffnung (10) der Wand umfasst, welche durchgehend ist und durch die wenigstens ein Teil der Wurzel (20) der Pflanze (2) wenigstens teilweise eingeführt werden kann, **dadurch gekennzeichnet, dass** sie wenigstens ein Rohr (11) umfasst, das abnehmbar in die Öffnung (10) der Seitenwand (5) eingeführt werden kann und wenigstens teilweise eine Wurzel (20) der wenigstens einen Pflanze (2) aufnehmen kann, und dadurch, dass das Rohr (11) aus elastisch verformbaren Materialien besteht, eine Rohrachse (X1) aufweist und sich über eine Länge (L) des Rohrs erstreckt, und dadurch, dass das Rohr (11) einen Ausschnitt (13) umfasst, der sich wenigstens teilweise über die Länge (L) des Rohrs parallel zur Rohrachse (X1) erstreckt.

2. Vorrichtung gemäß Anspruch 1, **dadurch gekennzeichnet, dass** die wenigstens eine Öffnung (10) der Wand fest mit einer Leitung (12) verbunden ist, die aus der Seitenwand (5) herausragt und eine Leitungsachse (X) aufweist, die in Bezug auf die Seitenwand (5) geneigt ist.

3. Vorrichtung gemäß einem der vorstehenden Ansprüche, **dadurch gekennzeichnet, dass** der Behälter (3) aus Kunststoff besteht.

4. Vorrichtung gemäß einem der vorstehenden Ansprüche, wobei der Behälter (3) eine Höhe (H) des Behälters aufweist, **dadurch gekennzeichnet, dass** die Öffnung (10) der Seitenwand (5) auf einer zweiten Höhe (h) in der Seitenwand (5) liegt, wobei die zweite Höhe (h) im Wesentlichen zwischen der Hälfte der Höhe (H) des Behälters (3) und drei Vierteln der Höhe (H) des Behälters (3) liegt.

5. Vorrichtung gemäß einem der vorstehenden Ansprüche, **dadurch gekennzeichnet, dass** der abnehmbare Deckel (8') zum Verschließen ein durchgehendes Loch umfasst, das ein Rohr (9) aufnehmen kann.

6. Vorrichtung gemäß einem der vorstehenden Ansprüche, **dadurch gekennzeichnet, dass** sie ein abnehmbares röhrenförmiges Zubehörteil (30) umfasst, das einen Außendurchmesser aufweist, der kleiner ist als ein Durchmesser der Öffnung (10) der Wand (5), um abnehmbar in der Öffnung (10) der Wand (5) aufgenommen zu werden, und einen Innendurchmesser aufweist, der größer ist als ein Durchmesser des Rohrs (11), um das Rohr (11) aufzunehmen.

7. Vorrichtung gemäß Anspruch 6, **dadurch gekennzeichnet, dass** das abnehmbare röhrenförmige Zubehörteil (30) wenigstens eine äußere radiale Dichtung (33) umfasst, wobei die radiale Dichtung (33) in einem Abstand von einem Ende (31) des abnehmbaren röhrenförmigen Zubehörteils (30) positioniert ist.

8. Anlage, umfassend wenigstens eine Vorrichtung (1) gemäß Anspruch 5, wobei die Anlage ein Wasserzufuhr-Hauptrohr (90) umfasst, das mit einer Wasseranschlussquelle (91) verbunden werden kann, wobei das Hauptrohr (90) mit wenigstens einem Rohr (9) verbunden ist, das in das durchgehende Loch des abnehmbaren Deckels (8') zum Verschließen der wenigstens einen Vorrichtung (1) mündet.

9. Anlage gemäß Anspruch 8, **dadurch gekennzeichnet, dass** sie die Wasseranschlussquelle (91) umfasst.

10. Verfahren zum Betrieb einer Anlage gemäß Anspruch 8 oder 9, die wenigstens eine Vorrichtung gemäß Anspruch 1 und 5 oder 3 und 5 umfasst, wobei das Verfahren die folgenden Schritte umfasst:
a) Platzieren eines Teils der Wurzel einer Pflanze in einem Rohr (11),
b) Einstecken des Rohrs (11) in die Öffnung (10) der Seitenwand (5) des Behälters (3),
c) vollständiges Vergraben des Behälters (3) und der freien Wurzeln der Pflanze in der Erde, wobei man den Deckel (8') sichtbar oberhalb des Niveaus der Erde lässt,
d) gegebenenfalls Wiederholen der Schritte a), b) und c) mit anderen Pflanzen,
e) Einstecken des Rohrs (9) in das durchgehende Loch des Deckels (8'),
f) Zuführen von Wasser zu dem Hauptrohr (91), das mit dem Rohr (9) verbunden ist, so dass der oder die Behälter (3) mit Wasser gefüllt werden,
g) visuelles Überwachen des oder der Deckel (8') und Unterbrechen der Wasserzufuhr zu dem Hauptrohr (91), sobald man beobachtet, dass Wasser aus dem durchgehenden Loch im Deckel (8') des Behälters (3) überläuft.

## Claims

1. A device (1) for supplying water (7) to a plant (2), in particular a vegetable plant, said device (1) comprising a container (3) having a bottom (4) of the container (3), a side wall (5) of the container (3) and an opening (6) of the container (3), through which the water (7) can be introduced so that the container (3) forms a water reservoir, said container (3) being able to be buried, said container (3) being made of a watertight material,
comprising a lid (8, 8') for closing said container opening (6), the lid (8, 8') being sealed and removable,
and the side wall (5) of the container (3) comprising at least one wall opening (10) which is continuous and through which at least part of the root (20) of the said plant (2) can be at least partially introduced,
**characterised in that** it comprises at least one tube (11), capable of being inserted removably into the said opening (10) in the side wall (5) and capable of at least partially receiving a root (20) of the said at least one plant (2), and **in that** the tube (11) is made of elastically deformable materials, has a tube axis (X1) and extends over a tube length (L), and **in that** the tube (11) includes a cutout (13) which extends parallel to the said tube axis (X1) at least partially over the said tube length (L).

2. Device according to claim 1, **characterized in that** said at least one wall opening (10) is integral with a duct (12) projecting from said side wall (5), having a duct axis (X) which is inclined with respect to said side wall (5).

3. Device according to one of the preceding claims, **characterised in that** the container (3) is made of plastic.

4. Device according to any one of the preceding claims, the container (3) having a container height (H), **characterized in that** the said opening (10) in the side wall (5) is made at a second height (h) in the side wall (5), the said second height (h) lying substantially between half the height (H) of the container (3) and three quarters of the height (H) of the container (3).

5. A device according to any one of the preceding claims, **characterised in that** said removable closure cover (8') comprises a through hole suitable for receiving a pipe (9).

6. Device according to any one of the preceding claims, **characterised in that** it comprises a tubular removable accessory (30), having an external diameter which is less than a diameter of the said opening (10) in the wall (5), in order to be removably accommodated in the said opening (10) in the wall (5) and having an internal diameter which is greater than a diameter of the said tube (11) in order to accommodate the said tube (11).

7. A device according to claim 6, **characterised in that** said tubular removable fitting (30) comprises at least one external radial seal (33), said radial seal (33) being positioned at a distance from one end (31) of said tubular removable fitting (30).

8. An installation comprising at least one device (1) as claimed in claim 5, said installation comprising a main water supply pipe (90) suitable for being connected to a water inlet source (91), said main pipe (90) being connected to at least one pipe (9) received in said through hole of said removable closure cover (8') of said at least one device (1).

9. Installation according to claim 8, **characterized in that** it comprises the said water supply source (91).

10. A method of operating an installation as claimed in claim 8 or 9, comprising at least one device as claimed in claim 1 and 5 or 3 and 5, said method comprising the following steps:
a) placing part of the root of a plant in a tube (11),
b) inserting the tube (11) into the opening (10) in the side wall (5) of the container (3),
c) completely bury the said container (3) and the free roots of the plant in the earth, leaving the lid (8') visible above the level of the earth,
d) if necessary, repeat operations a), b) and c) for other plants,
e) insert the hose (9) into the through hole in the lid (8'),
f) supplying water to the main hose (91), connected to the hose (9), so as to fill the container or containers (3) with water,
g) visually monitoring the lid or lids (8') and stopping the supply of water to the main hose (91) as soon as an overflow of water is observed through the through hole in the lid (8') of the container (3).
